# EUROPEAN PATENT SPECIFICATION

(11) **EP 1 428 642 B1**
(45) Date of publication and mention of the grant of the patent: **29.10.2008**
(21) Application number: 02707131.5
(22) Date of filing: 22.03.2002
(51) Int. Cl.: B29B 17/00, C10B 53/00, C10L 5/48, C21B 5/00, B29B 9/08, B29B 9/06, B30B 11/22, B29C 47/30, B01J 2/20, C21B 5/02

(54) **METHOD OF MANUFACTURING WASTE GRANULATED PLASTICS, AND METHOD FOR THERMAL DECOMPOSITION OF THE PLASTICS**
VERFAHREN ZUR HERSTELLUNG VON GRANULIERTEM ABFALLKUNSTSTOFF UND VERFAHREN ZUR THERMISCHEN ZERSETZUNG DES KUNSTSTOFFS
PROCEDE DE RECUPERATION DE DECHETS CONTENANT DES MATIERES PLASTIQUES ET PROCEDE DE DECOMPOSITION THERMIQUE DE CES MATIERES PLASTIQUES

(30) Priority: 21.09.2001 JP 2001288126
(43) Date of publication of application: 16.06.2004
(73) Proprietor: Nippon Steel Corporation, Tokyo 100-8071 (JP)
(72) Inventor: IBARAKI, Tetsuharu NIPPON STEEL CORP. KIMITSU WORK, Kimitsu-shi, Chiba 299-1141 (JP); IKEDA, Motoki, NIPPON STEEL CORP. KIMITSU WORKS, Kimitsu-shi, Chiba 299-1141 (JP); KOSEKI, Tsuneo, NIPPON STEEL CORP. KIMITSU WORKS, Kimitsu-shi, Chiba 299-1141 (JP); GOTO, Hiroki, NIPPON STEEL CORP. KIMITSU WORKS, Kimitsu-shi, Chiba 299-1141 (JP)
(74) Representative: Vossius & Partner
(86) International application number: PCT/JP2002/002795
(87) International publication number: WO 2003/026862

(56) References cited:
- EP-A- 1 236 790
- EP-A1- 1 083 212
- WO-A-01/32383
- WO-A1-95/17527
- DE-A- 19 706 374
- JP-A- 2000 198 992
- JP-A- 2001 049 261
- JP-A- 2001 232 634
- JP-A- 2001 341 131
- US-A- 5 009 586
- PATENT ABSTRACTS OF JAPAN vol. 2000, no. 09, 13 October 2000 (2000-10-13) & JP 2000 153261 A (MIIKE TEKKOSHO:KK), 6 June 2000 (2000-06-06)
- PATENT ABSTRACTS OF JAPAN vol. 1999, no. 11, 30 September 1999 (1999-09-30) & JP 11 156855 A (NKK CORP), 15 June 1999 (1999-06-15)

## Description

### TECHNICAL FIELD

The present invention relates to technology relating to the method of production of granules by compression molding waste plastics as a pretreatment for recycling. Further, it relates to a method of converting waste plastics to a substance mainly comprised of gas or oil by thermal decomposition of the produced waste plastic granules.

### BACKGROUND ART

Polyethylene, polystyrene, polyvinyl chloride, and other plastics are superior in moldability and durability, so are used for diverse applications such as containers, wrapping, housings of home electric appliances, and toys. As a result, however, large amounts are discarded as waste. The emission of large amounts of plastic waste is becoming a social problem. In particular, the problems posed with respect to the environment and resources are large. That is, when incinerating such waste plastics, the combustion temperature rises too much and the problem arises of damage to the incinerator or production of harmful gases or dioxins at the time of combustion. Further, when burying the used plastics in landfills, aside from the problem of the lifetime of the disposal sites, there has been the problem that the soil does not solidify since the plastic does not decompose.

Therefore, recycling of such waste plastics solves the above problem of waste and is an effective means from the viewpoint of energy saving and resource conservation as well, so various methods are being utilized. For example, in the methods for recycling materials, there is the method of using bottles made of polyethylene terephthalate as textile feedstock. Further, as chemical recycling, there are gasification for converting the plastics to hydrogen, carbon monoxide, and other gases, oilification for converting them to hydrocarbon oils, thermal decomposition for obtaining gases, oils, and carbon inside coke ovens, iron ore reduction by blowing plastics into a blast furnace and gasifying them for use as a reducing agent, etc. Chemical recycling can recycle even inferior quality waste plastics, has broad applications, and is superior as a recycling means from the viewpoint of resource conservation converting the plastics to natural materials source.

To recycle waste plastics for use as chemical feedstock, it is necessary to separate foreign matter, then granulate the plastics. As the method for such pretreatment, for example, as disclosed in Japanese Unexamined Patent Publication (Kokai) No. 8-99318, in the general practice, the waste plastics are crushed to a size suitable for reuse and compressed in a mold to produce granular plastics (hereinafter called "plastic granules"). In the technology for melting and granulating plastics, a special apparatus is required for melting. Further, there is the problem that it is necessary to treat the gases etc. generated along with the melting. Compared with compression molding, the treatment is expensive. On the other hand, with compression molding, the waste plastics are compression molded at a relatively low temperature, so there is the advantage that the treatment cost is low.

In particular, for recycling the used plastics recovered from the home (hereinafter referred to as "general waste plastics") produced in such large quantities to chemical feedstock, compression molding is superior. In recycling of general waste plastics, the foreign matter in the waste plastics is removed, then the waste plastics are crushed and compression molded by ejection through extrusion holes to produce plastic granules. This method is high in productivity and is economical.

As explained above, the recycling of waste plastics is important for dealing with environmental and resource problems. However, for recycling using waste plastics as a chemical feedstock by the thermal decomposition method, the foreign matter is removed, then a suitable size of plastic granules is produced. At this time, it is necessary to perform suitable pretreatment and compression molding to produce plastic granules with a high quality in shape and a high apparent density. When the quality in shape of the granules is poor, there are problems that the handling property of the plastic granules is poor, the powder generated during handling due to the poor shape sticks to the conveyance path and storage apparatus, etc. That is, for chemical feedstock or fuel, plastic granules of a high quality in shape and density are sought. Further, when using plastic granules with a low apparent density, there is the problem that the volume per weight is large and the conveyance apparatus and storage tank become large and the bonding of the plastics inside the plastic granules is poor, so there was the problem of breakage during conveyance. Here, "breakage" means part of the granules becoming powderized and separating.

In the prior art, as the method of producing plastic granules with a good shape and apparent density, improvements have been made when performing treatment by a compression molding machine of a type extruding from extrusion holes. For example, as the method of compression molding waste plastics, there is the method of controlling the adhered moisture and molding temperature etc. of the waste plastics so as to improve the quality of shape of the plastic granules. Sometimes the crushing conditions of the waste plastics are poor and there is a bad effect on operation for molding.

That is, when the crushed size of the waste plastics is too large, the resistance when the waste plastics pass through the extrusion holes of the compression molding machine is large and the problem of the plastics overly concentrating at the extrusion holes arose. Therefore the problem of the plastic granules not being formed normally arose. As a result, voids formed in the plastic granules, the compaction became insufficient, the quality of shape became poor, and a problem arose due to the same. In particular, this problem was notable when the size of the thick plastics was larger than the diameter of the extrusion holes.

On the other hand, when the crushed size of the waste plastics is too fine as well, problems arose at the time of compression molding. That is, if the degree of crushing goes too far and the crushed pieces of the waste plastics become too small compared with the diameter of the extrusion holes, the problem arises that the entanglement of the waste plastics inside the plastic granules becomes insufficient. Further, in this case, the resistance when passing through the extrusion holes becomes too weak and sometimes sufficient compaction is impossible. If the crushed pieces of the waste plastics become too much smaller than the diameter of the extrusion holes in this way, the shape of the plastic granules becomes poor and the problem arises of an insufficient apparent density.

Further, to suitably produce granules, it is effective to mix in a suitable percentage of film-shaped plastics. That is, the film-shaped plastics, in particular polyethylene, softens due to the heat of friction at the time of compression molding and functions as a binder of the plastic granules. However, in the prior art, this fact was not given sufficient attention and the effect was not sufficiently brought out.

In this way, in the prior art, there were the problems that there was insufficient knowledge for suitably producing plastic granules and only granules with large variations in quality of shape and apparent density could be produced. Therefore, new technology has been sought for solving this problem.

Documents WO-A-01/32383 (corresponding to EP-A-1 236 790) and JP-A-2001 232 634 disclose methods of producing granules of improved stability, by extruding a mix of crushed film-shaped and solid waste plastics.

### DISCLOSURE OF THE INVENTION

The present invention was made to solve the above problems and has the following as its gist:
(1) A method of molding waste plastics by ejection into a molding apparatus having extrusion holes to produce granules, said method of production of waste plastic granules characterized by crushing waste plastics containing at least 15 mass% of film-shaped plastics having a thickness of not more than 0.15 mm so that at least 70 mass% of film-shaped plastics having a thickness of not more than 0.15 mm has a maximum length of the crushed pieces of at least 0.5 time the diameter of said extrusion holes and at least 70 mass% of plastics having a thickness of more than 0.15 mm has a maximum length of the crushed pieces of not more than 1 time the diameter of said extrusion holes and molding said crushed waste plastics by ejecting it through said extrusion holes having a diameter of 5 to 80 mm.
(2) A method of production of waste plastic granules as set forth in (1), characterized in that said waste plastics contain at least 7 mass% of film-shaped polyethylene having a thickness of not more than 0.15 mm and by molding said waste plastics by ejection through said extrusion holes in a range of temperature of 100 to 140°C.
(3) A method of production of waste plastic granules as set forth in (1), characterized in that part or all of said waste plastics is used waste plastics recovered from the home.
(4) A method of production of waste plastic granules as set forth in any one of (1) to (3), characterized in that said molding apparatus having extrusion holes is comprised of a barrel-shaped plastic holding container having an end plate having a plurality of extrusion holes and a screw type ejector provided at its inside.
(5) A method of production of waste plastic granules as set forth in any one of (1) to (3), characterized in that said molding apparatus having extrusion holes is comprised of a metal plate having a plurality of extrusion holes and a roller type ejector.
(6) A method of thermal decomposition of waste plastic granules characterized by mixing waste plastic granules produced by a method as set forth in any one of (1) to (3) with coal having an average particle size of not more than 5 mm and having a caking property at a mixture ratio of not more than 10 vol% and dry distilling the result at a maximum attained temperature of at least 1000°C.
(7) A method of thermal decomposition of waste plastic granules as set forth in (6), characterized in that said dry distillation is performed using a coke oven.
(8) A method of thermal decomposition of waste plastic granules as set forth in (6), characterized in that the ash content in said waste plastic granules is not more than 8 mass%.
(9) A method of thermal decomposition of waste plastic granules characterized by blowing waste plastic granules having an average size of 5 to 8 mm produced by a method as set forth in any one of (1) to (3) into an ironmaking blast furnace together with air.

### BRIEF DESCRIPTION OF THE DRAWINGS

FIG. 1 is a view of an example of a compression molding facility for waste plastics of the present invention and shows the overall flow of the same.
FIG. 2 is a view of one example of a compression molding machine for waste plastics for working the present invention and shows an apparatus of a type ejecting waste plastics by a screw and extruding it from extrusion holes of an end plate.
FIG. 3 is a view of the effects of the percent of mixture of film-shaped plastics on the apparent density of plastic granules.
FIG. 4 is a view of the effects of the diameter of the extrusion holes on the apparent density of the plastic granules.
FIG. 5 is a view of the effects of the volume ratio of the plastic granules (with respect to bulk volume of coal) on the yield of the plastic granules (ratio of recovery of hydrogen, hydrocarbons, coke, etc.)

### BEST MODE FOR CARRYING OUT THE INVENTION

The inventors engaged in various studies on technology for producing plastic granules for chemical feedstock through compression molding of waste plastics and invented the technology for obtaining plastic granules with a good quality of shape and high apparent density.

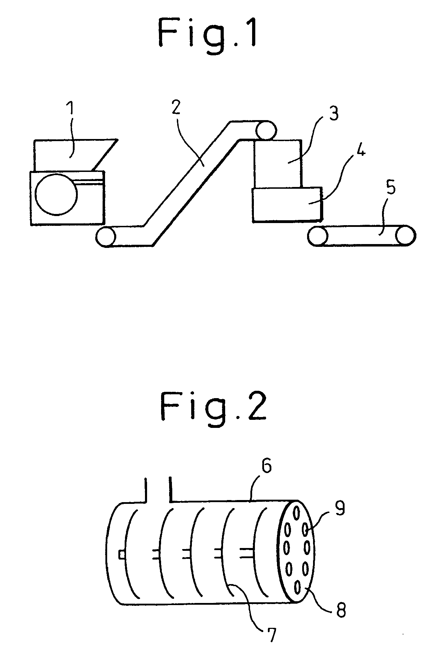

The method of compression of waste plastics in the present invention will be explained using one example of an apparatus used for the present invention, that is, the apparatus shown in FIG. 1. The apparatus of FIG. 1 is comprised of a crusher 1, a crushed matter conveyor 2, a crushed matter storage tank 3, a compression molding machine 4, and a cooling conveyor 5. Note that when using waste plastics containing a large amount of foreign matter as a feedstock, it is preferable to provide a step of separation of the foreign matter before this apparatus.

At the initial stage, the waste plastics are crushed by the crusher 1. The crusher 1 may be of any type, but crushing by a single axis type crusher comprised of a shaft having crushing blades and fixed blades is effective. After crushing the waste plastics, the crushed plastic pieces are shaped by being ejected through the extrusion holes 9 of the compression molding machine 4. In the example of the facility shown in FIG. 1, use was made of a compression molding machine comprised of a plastic holding container having a plurality of extrusion holes at its end plate and a screw type ejector inside it. Details of this compression molding machine are shown in FIG. 2. That is, the crushed plastic pieces are shaped by ejection through the extrusion holes 9. However, the compression molding machine 4 may be any one having a plastic ejection mechanism and extrusion holes. There are a type ejecting waste plastic pieces at the side surfaces of a cylinder having a plurality of extrusion holes by an ejection roller, a type of substantially the same type as this but having a mechanism for cutting the waste plastics inside the apparatus and utilizing the frictional heat. When using used waste plastics recovered from the home etc., a large amount of metal foreign matter etc. is contained. Therefore, a screw ejection type which is resistant to clogging of the extrusion holes due to this is preferable. When the content of foreign matter is small, however, a compression molding machine of the type having a metal plate provided with a large number of extrusion holes, having a roller roll over its surface, and extruding waste plastics from the extrusion holes by this roller is effective in that it can raise the density of the granules. Normally, a screw type compression molding machine is used for production of granules of a diameter of 10 to 80 mm, while a roller type compression molding machine is used for production of granules of 5 to 30 mm.

With the compression molding machine 4 of the example of FIG. 1, the waste plastics are raised to 100 to 140°C and passed through the extrusion holes 9 so as to convert the waste plastics to cylindrically shaped plastic granules. These granules are high in temperature, so are cooled by the cooling conveyor 5. Inside of the compression molding machine 4, frictional heat is caused by the mechanical work at the time of ejection and the temperature of the waste plastics is raised. The crushed waste plastics are ejected in the direction of the end plate 8 by the screw 7 inside the barrel 6. The plastics are extruded from the plurality of extrusion holes 9 provided at the end plate 8 and is cut to form granules.

Below, the method of production of plastic granules having a high apparent density, little breakage, and a good quality of shape will be explained. Basically, at the time of compression, the film-shaped plastics are made to function as a binder and the size of the cut pieces of the waste plastics is suitably controlled so as to produce plastic granules of a high apparent density and a good quality of shape.

The inclusion of film-shaped plastics in the waste plastics of the feedstock is preferable for molding. This is because the film-shaped plastics have a large function as a binder inside the plastic granules. Inside the compression molding machine 4, a flow occurs in the plastic aggregates and mixture occurs. At this time, the film-shaped plastics stretch well, deform, enter between the thick plastics, and fill the voids, so there is the effect of bonding the relatively thick plastics.

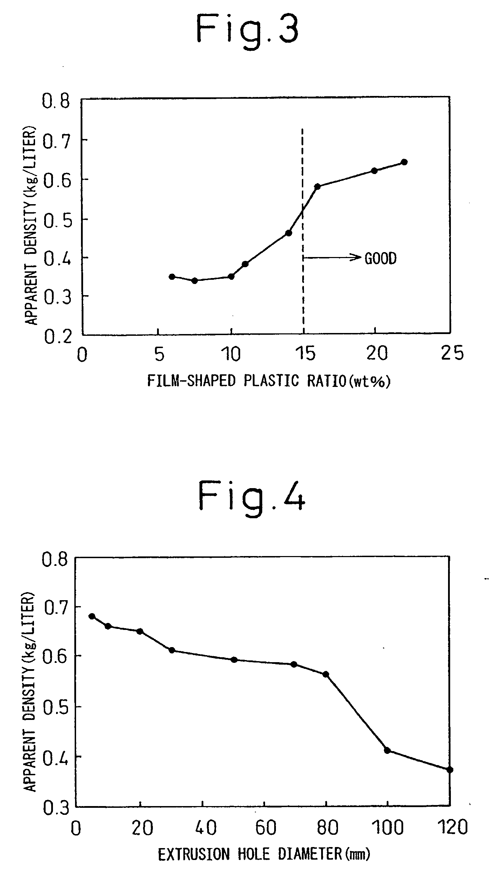

The inventors investigated the suitable ratio of mixing of the film-shaped plastics. As the conditions for the compression molding, the granules were treated at a molding temperature of 110°C and otherwise the same conditions. The results are shown in FIG. 3. Since the ratio of mixture of the film-shaped plastics is about 10 mass%, the apparent density of the plastic granules starts to rise. When the ratio of mixture exceeds 15 mass%, the apparent specific gravity becomes a good density of 0.55 kg/liter or more. Further, the inventors investigated the powderization rate when dropping these plastic granules 1 meter, whereupon they found that with a ratio of mixture of film-shaped plastics of not less than 15 mass%, the powderization rate is a low one of not more than 5% - a good result. That is, the inventors found that the ratio of mixture of the film-shaped plastics being at least 15 mass% is an important condition for producing plastic granules with little powderization and good quality of shape. Here, the "film-shaped plastics" are sheet-shaped plastics having a thickness of not more than 0.15 mm. Further, the "apparent density" is the value of the mass of the plastic granules divided by the volume including even the inside voids.

Note that the "powderization rate at the time of dropping by 1 meter" shows the ratio (mass%) of the mass of the granules of less than 3 mm when sieved by a sieve having a mesh of 3 mm after dropping the granules from a height of 1 meter with respect to the mass of all of the granules before dropping.

Further, in particular, polyethylene softens around 100°C and is good in bondability, so is an important plastic for raising the apparent density of the plastic granules and improving the quality of shape. To obtain good results in terms of density and breakage, it is preferable that the film-shaped polyethylene be contained in the waste plastics in a certain ratio. The inventors conducted experiments and as a result found that if the film-shaped polyethylene of a thickness of not more than 0.15 mm is present in an amount of not less than 7 mass%, it is easy to produce plastic granules with little breakage and a high apparent density. With a ratio of mixture of this film-shaped polyethylene, the molding temperature is preferably in the range of 100 to 140°C. Further, the detailed value of the suitable temperature differs depending on the ratio of mixture of the film-shaped polyethylene or the ratio of the thick plastics, but when molding waste plastics of an ordinary composition, the value is in the above temperature range. For example, when the ratio of mixture of the film-shaped polyethylene is high, the compression molding is preferably performed at a relatively low temperature of around 100°C and when the ratio of the thick plastics is high, it is preferably performed at a relatively high temperature of 120 to 140°C.

Another important condition for operation relating to waste plastics is the size of the plastics after crushing. The size of the crushed plastics is required to be such that at least 70 mass% of the film-shaped plastics have a maximum length of crushed pieces of at least 0.5 time the diameter of the extrusion holes of the compression molding machine 4 and at least 70 mass% of the plastics have a maximum length of the crushed pieces of not more than 1 time the diameter of the extrusion holes and a thickness of over 0.15 mm (hereinafter called the "thick plastics").

The thick plastics experience little deformation before and inside the extrusion holes 9 of the compression molding machine 4, so if a large amount of the thick plastics has a size larger than the diameter of the extrusion holes 9, the ejection resistance becomes greater and the productivity falls. Further, in this case, sometimes the extrusion holes 9 become blocked due to poor ejection of the plastics. If the ratio of the thick plastics having a maximum length of more than the diameter of the extrusion holes 9 exceeds 30 mass%, the ratio of blockage of the extrusion holes 9 greatly increases. Further, under these conditions, there was also much breakage of the plastic granules. This is because the large sized thick plastics ended up filling the extrusion holes across the diametrical direction and being connected in the axial direction and obstructed the function of the film-shaped plastics as a binder.

At the time of compression molding, if the size of the film-shaped plastics is too small, it does not satisfy the length necessary for bonding with the thick plastics, so the binder effect drops. Therefore, it is necessary that film-shaped plastics of a size of not less than certain extent be contained. The inventors engaged in repeated experiments and found that if the ratio of the film-shaped plastics of a size larger than 1/2 of the diameter of the extrusion holes 9 exceeds 70%, the bondability of the plastic granules is improved.

The inventors found that there is a suitable range to the diameter of the extrusion holes 9 in order to fully bring out the effects explained above. That is, they found that if the diameter of the extrusion holes 9 is too large, the frictional heat at the inside surfaces of the holes is not sufficiently transmitted to the inside of the granules. As observed in FIG. 4 showing the results of experiments, if the diameter of the extrusion holes exceeds 80 mm, the state of adhesion of the plastic granules deteriorates, the apparent density falls, and the powderization rate at the time of dropping by 1 meter rises. Therefore, it is effective if the diameter of the extrusion holes 9 is not more than 80 mm.

On the other hand, if the diameter of the extrusion holes 9 is too small, blockage of the extrusion holes due to the small-sized foreign matter contained in the waste plastics easily arises. Waste plastics, which are originally wastes, generally contain foreign matter. Among this, small-sized foreign matter is hard to remove by a magnetic separator or other separator. Even if removing foreign matter in advance, the waste plastics after crushing contain, though in small amounts, foreign matter such as metal wire of lengths of 5 to 10 mm or so and pieces of glass. This problem becomes more conspicuous when treating the waste plastics discharged from the home.

This small-sized foreign matter clogs the extrusion holes 9 of the compression molding machine 4 and becomes a cause of obstruction of operation. As the diameter of the extrusion holes 9 becomes smaller, the frequency of blockage of the extrusion holes 9 due to clogging by foreign matter increases. If the extrusion hole diameter is not more than 10 mm, the frequency of blockage starts to increase. If the diameter becomes less than 5 mm, 35% of the extrusion holes 9 are blocked in 10 hours of operation and the problem arises that operation cannot be continued. Therefore, it is important that the diameter of the extrusion holes 9 be in the range of 5 to 80 mm.

The plastic granules produced by the above method are utilized as chemical feedstock. In the process of use, granules with a high apparent density and little breakage are good in handling property, free from the problem of powder sticking to the conveyance apparatus or storage tanks, and higher in packing rate in the reaction tank, so there is the advantage of an improvement in the productivity.

As the method of use as a chemical feedstock, there are the method of heating the granules in the absence of oxygen to decompose them and obtain hydrogen, methane, higher hydrocarbons, benzene, and other substances and the method of thermal decomposing the granules in the presence of oxygen to obtain carbon monoxide, carbon dioxide, hydrogen, and other gases. These are effective means since good quality feedstock oil or feedstock gas can be obtained.

Further, among the thermal decomposition methods, as thermal decomposition methods in the absence of oxygen, there are the method of dry distillation together with coal and the method of thermal decomposition by heating in a metal reaction vessel. Further, among the methods for thermal decomposition in the presence of oxygen, as industrially effective methods, there are the method of causing a reaction with the oxygen inside a metal or refractory reaction vessel and the method of blowing granules into a blast furnace together with air to break it down into hydrogen and carbon monoxide for use in reduction of ore.

The method of mixing with coal and dry distillation is a particularly superior method as a method of thermal decomposition of waste plastics. If thermally decomposing plastics in the absence of oxygen, hydrogen and hydrocarbon atoms are produced, but carbon-based residue remains as dry distillation residue. However, if mixing with coal having a caking property and dry distillation, the residue is adsorbed at the coal during dry distillation softened around 400°C and becomes part of the coke.

Further, at this time, finally, it is necessary to make the dry distillation temperature not lower than 1000°C. The reason is that for the residue adsorbed at the coal around 400°C to create strong bonds with the coal, it is necessary to complete the dry distillation at a high temperature of not lower than 1000°C. Therefore, by dry distillation at a temperature of not lower than 1000°C for not shorter than 2 hours, it is possible to produce high strength coke even if containing residue of waste plastics.

This coke can be effectively used as fuel or a reducing agent, so recycling with little unusable parts and a high yield becomes possible. This method is effective since it can be performed using existing coke ovens and therefore the capital costs or operating costs can be reduced.

In the method of thermal decomposition by mixing with coal and dry distillation, if using plastic granules produced by the method of the present invention, effective treatment is possible. That is, since the apparent density of the granules produced by the method of the present invention is a high one of 0.5 to 0.8 kg/liter, there is the effect that it is possible to make effective use of the reaction vessel of the dry distillation apparatus. In addition to this effect, the density of the residue containing carbon after dry distillation is relatively high, so there is the effect that the residue is effectively adsorbed at the softened coal. This effect becomes greater the higher apparent density of the plastic granules. Therefore, when using plastic granules produced by the present invention, there is the effect that the ratio of granules dropping in yield as residue is small.

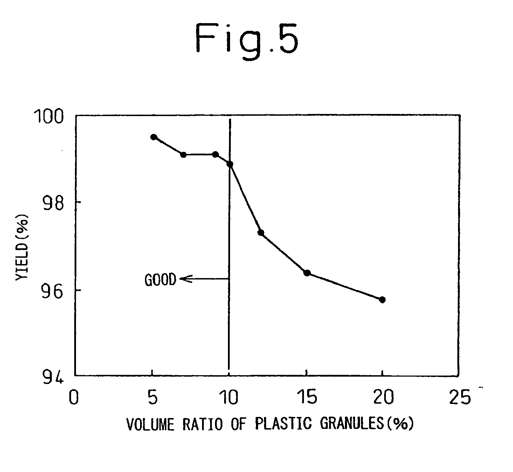

The inventors further engaged in various experiments and found that in order to efficiently cause the residue to be adsorbed on the softened coal, it is important that the average particle size of the coal be not more than 5 mm and that the plastic granules be mixed so as to be enveloped in coal. Due to this, the inventors found that, as shown in FIG. 5, mixing to give a volume of plastic granules of a ratio of not more than 10% of the volume of the coal is an effective means.

On the other hand, with plastic granules produced by the prior art method, since powder is included and the apparent density is a low 0.3 to 0.5 kg/liter, the amount of the residue adsorbed at the softened portion of the coal is reduced. In this way, the method of mixing the plastic granules produced using the present invention with coal and dry distilling the result gives less not-recycled residue and a high yield compared with a method using granules produced by the prior art method.

The "yield" spoken of in the present specification means the ratio (mass%) of the total mass of the waste plastic granules not only recovered as hydrogen, hydrocarbons, etc., but also recovered adsorbed on the coke, coal, etc. with respect to the total mass of the waste plastic granules used for thermal decomposition.

The inventors found that the inorganic matter contained in the waste plastic granules also has a detrimental effect at the time of thermal decomposition. The inorganic matter (so-called "ash content") has a poor bondability with the softened coal, so with granules with a large ash content, the residue not adsorbed on the coke increases. Experiments of the inventors found that with an ash content of more than 8 mass%, the adsorption of residue rapidly deteriorates. The ash content of the granules is preferably not more than 8 mass%.

Further, in the method of causing a reaction with oxygen inside the reaction vessel or method of blowing the granules into a blast furnace together with air to obtain hydrogen and carbon monoxide for use in reducing ore, the granules are fed to the reaction vessel or blast furnace along with gas or air, so at the time of conveyance by the flow of air, the plastic granules of more than 8 mm sometimes separate. In this case, the powdered plastic sticks on the inside of the piping or inside of the blower and induce various types of trouble in the equipment. If using plastic granules produced using the present invention, however, the above problems no longer easily occur.

With the method blowing the granules into a blast furnace for reduction, it is important that the diameter of the plastic granules be in the range of 5 to 8 mm since this prevents blockage of the tuyere into the furnace. That is, plastic granules of not less than 8 mm size are too large and cause blockage around the tuyere, so it is necessary to define the maximum size as explained above.

### EXAMPLES

Waste plastics were compression molded based on the present invention. The results are shown below. According to the method of the present invention, compared with the prior art method, it was possible to produce plastic granules for chemical feedstock having a good quality of shape. The effect of the present invention will be explained using the results of production by operation in accordance with the conditions of the present invention when using a screw ejection type compression molding machine shown in FIG. 2 to produce granules of 20 mm size in the waste plastic compression molding facility shown in FIG. 1. Further, as a comparative example, figures for plastic granules produced under operating conditions outside of the conditions of the present invention will also be explained.

In the Example, waste plastics containing 22 mass% of film-shaped plastics having a thickness of not more than 0.15 mm and 10 mass% of film-shaped polyethylene were treated. The screen at the exit of the crusher 1 had a mesh of 25 mm. As a result, the size of the waste plastics fed to the compression molding machine 4 was as follows: 77% of the film-shaped plastics had a size of at least 0.5 time (10 mm) the diameter of the extrusion holes and 81% of the thick plastics having a thickness of at least 0.15 mm had a size of not more than 1.0 time (20 mm) the diameter of the extrusion holes.

The crushed plastics were compression molded at 115°C. As a result, good plastic granules having an apparent density of 0.72 kg/liter and a powderization rate at the time of dropping 1 meter of 2.5% were obtained. In this way, in operation using the present invention, it was possible to produce plastic granules with little powderization and high density.

As Comparative Example 1, in the same way as the examples, waste plastics containing 22 mass% of film-shaped plastics were treated. Note that the mesh of the exit side screen of the crusher 1 was 12 mm. As a result, the size of the waste plastics fed to the compression molding machine 4 having extrusion holes of a diameter of 20 mm was as follows: 26% of the film-shaped plastics had a size of at least 0.5 time the diameter of the extrusion holes and 99% of the thick plastics had a size of not more than 1.0 time the diameter of the extrusion holes.

The crushed waste plastics were compression-molded at 110°C. As a result, the apparent density of the plastic granules was 0.42 kg/liter and the powderization rate at the time of dropping by 1 meter was 11.7%. In this way, under operating conditions outside of the scope of the present invention, the apparent density was low and the granules easily powderized.

As Comparative Example 2, waste plastics containing only 12 mass% of film-shaped plastics were treated. Note that the mesh of the exit side screen of the crusher 1 was 25 mm. As a result, the size of the waste plastics fed to the compression molding machine 4 was as follows: 73% of the film-shaped plastics had a size of at least 0.5 time the diameter of the extrusion holes and 78% of the thick plastics had a size of not more than 1.0 time the diameter of the extrusion holes.

The crushed waste plastics were compression molded at 110°C. As a result, the apparent density of the plastic granules was 0.40 kg/liter and the powderization rate at the time of dropping by 1 meter was 12.1%. In this example as well, under operating conditions outside of the scope of the present invention, the apparent density was low and the granules easily powderized.

The plastic granules produced by the operations of the Example and Comparative Example 1 were mixed with coal of an average particle size of 3.3 mm having a caking property and thermally decomposed at a high temperature (dry distillation). As this thermal decomposition apparatus, a coke oven was used. The ratio of mixture into the coal was 4.2 mass%, while the volume of the plastic granules was 8.8% with respect to the bulk volume of the coal. In this state, the granules were dry distilled at a maximum temperature of 1120°C over 17 hours.

The plastic granules obtained by the operation of the Example were dry distilled under the above conditions. As a result, it was possible to recover hydrogen, methane, higher hydrocarbons, benzene, etc. Almost all of the residue was adsorbed by the coke. As a result, the yield of plastic granules was 99.2%.

On the other hand, the granules produced in Comparative Example 1 were dry distilled under similar conditions. As a result, it was confirmed that residue comprising about 6 mass% of the feedstock plastic granules was not adsorbed by the coke. The residue contains a large amount of impurities etc., so could not be effectively used. That is, under these conditions, the yield of the plastic granules was 94%. Note that in the oilification method or other thermal decomposition method not calling for mixture with coal, the yield of the plastic granules was about 80%.

Granules having a diameter of 6 mm were produced using the waste plastics used in the Example as a feedstock. The screen at the outlet of the crusher 1 had a 5 mm mesh. As a result, the size of the waste plastics fed to the compression molding machine 4 was as follows: 88% of the film-shaped plastics had a size of at least 0.5 time (3 mm) the diameter of the extrusion holes, while 92% of the thick plastics had a size of not more than 1.0 time (6 mm) the diameter of the extrusion holes.

The crushed waste plastics were molded at 120°C. As a result, the apparent density of the granules was 0.65 kg/liter and the powderization rate to not more than 1 mm was 3% and the shape was good. Note that a powderization rate of not more than 1 mm shows the ratio (mass%) of the mass of the granules of less than 1 mm with respect to the mass of all of the granules before sieving at the time of sieving the granules by a sieve having a mesh of 1 mm. These granules were blown into a blast furnace tuyere together with air, whereby it is possible to blow them steadily without clogging of the blowing pipes. As a result, it was possible to thermally decompose the waste plastic granules at a high temperature of about 2000°C to create carbon monoxide and hydrogen and use the same effectively for reduction of iron ore in the blast furnace.

In this way, in operation using the present invention, it was possible to produce plastic granules with a large apparent specific gravity and little breakage. Further, it was possible to thermally decompose the plastic granules at a high efficiency.

### INDUSTRIAL APPLICABILITY

The present invention provides a method of producing granules of waste plastics with little breakage and good quality of shape. By using the present invention, it is possible to form plastic granules suitable for thermal decomposition feedstock. As a result, it is possible to use waste plastics as feedstock for gasification apparatuses, oilification apparatuses, coke ovens, blast furnaces, and other reaction apparatuses. Further, it is possible to economically thermal decompose and recycle the plastics by a coke oven, blast furnace, etc.

## Claims

1. A method of molding waste plastics by ejecting it into a molding apparatus having extrusion holes to produce waste plastic granules by crushing waste plastics containing at least 15 mass% of film-shaped plastics having a thickness of not more than 0.15 mm and plastics having a thickness of more than 0.15 mm, so that at least 70 mass% of the film-shaped plastics having a thickness of not more than 0.15 mm has a maximum length of the crushed pieces of at least 0.5 time the diameter of said extrusion holes and at least 70 mass% of the plastics having a thickness of more than 0.15 mm has a maximum length of the crushed pieces of not more than 1 time the diameter of said extrusion holes and molding said crushed waste plastics by ejecting it through said extrusion holes having a diameter of 5 to 80 mm.

2. A method of production of waste plastic granules as set forth in claim 1, **characterized in that** said waste plastics contain at least 7 mass% of film-shaped polyethylene having a thickness of not more than 0.15 mm and by molding said waste plastics by ejecting it through said extrusion holes in a range of temperature of 100 to 140°C.

3. A method of production of waste plastic granules as set forth in claim 1, **characterized in that** part or all of said waste plastics is used waste plastics recovered from the home.

4. A method of production of waste plastic granules as set forth in any one of claims 1 to 3, **characterized in that** said molding apparatus having extrusion holes is comprised of a barrel shaped plastic holding container having an end plate having a plurality of extrusion holes and a screw type ejector provided at its inside.

5. A method of production of waste plastic granules as set forth in any one of claims 1 to 3, **characterized in that** said molding apparatus having extrusion holes is comprised of a metal plate having a plurality of extrusion holes and a roller type ejector.

6. A method of thermal decomposition of waste plastic granules **characterized by** mixing waste plastic granules produced by a method as set forth in any one of claims 1 to 3 with coal having an average particle size of not more than 5 mm and having a caking property at a mixture ratio of not more than 10 vol% and dry distilling the result at a maximum attained temperature of at least 1000°C.

7. A method of thermal decomposition of waste plastic granules as set forth in claim 6, **characterized in that** said dry distillation is performed using a coke oven.

8. A method of thermal decomposition of waste plastic granules as set forth in claim 6, **characterized in that** the ash content in said waste plastic granules is not more than 8 mass%.

9. A method of thermal decomposition of waste plastic granules **characterized by** blowing waste plastic granules having an average diameter of 5 to 8 mm produced by a method as set forth in any one of claims 1 to 3 into an ironmaking blast furnace together with air.

## Patentansprüche

1. Verfahren zum Formen von Kunststoffabfällen durch deren Ausstoßen in eine Formgebungsvorrichtung mit Extrusionslöchern, um Kunststoffabfallgranulat herzustellen durch: Zerkleinern von Kunststoffabfällen, die mindestens 15 Masse-% folienförmiger Kunststoffe mit einer Dicke von höchstens 0,15 mm und Kunststoffe mit einer Dicke über 0,15 mm enthalten, so daß mindestens 70 Masse-% der folienförmigen Kunststoffe mit einer Dicke von höchstens 0,15 mm eine maximale Länge der zerkleinerten Stücke von mindestens dem 0,5-fachen des Durchmessers der Extrusionslöcher haben und mindestens 70 Masse-% der Kunststoffe mit einer Dicke über 0,15 mm eine maximale Länge der zerkleinerten Stücke von höchstens dem Durchmesser der Extrusionslöcher haben, und Formen der zerkleinerten Kunststoffabfälle durch Ausstoßen durch die Extrusionslöcher mit einem Durchmesser von 5 bis 80 mm.

2. Verfahren zur Herstellung von Kunststoffabfallgranulat nach Anspruch 1, **dadurch gekennzeichnet, daß** die Kunststoffabfälle mindestens 7 Masse-% folienförmiges Polyethylen mit einer Dicke von höchstens 0,15 mm enthalten, und durch Formen der Kunststoffabfälle durch Ausstoßen durch die Extrusionslöcher in einem Temperaturbereich von 100 bis 140 °C.

3. Verfahren zur Herstellung von Kunststoffabfallgranulat nach Anspruch 1, **dadurch gekennzeichnet, daß** die Kunststoffabfälle teilweise oder vollständig aus Haushalten rückgewonnene gebrauchte Kunststoffabfälle sind.

4. Verfahren zur Herstellung von Kunststoffabfallgranulat nach einem der Ansprüche 1 bis 3, **dadurch gekennzeichnet, daß** die Formgebungsvorrichtung mit Extrusionslöchern einen trommelförmigen, Kunststoffe aufnehmenden Behälter mit einer Endplatte mit mehreren Extrusionslöchern und einen schneckenartigen Ausstoßer aufweist, der in ihrem Inneren vorgesehen ist.

5. Verfahren zur Herstellung von Kunststoffabfallgranulat nach einem der Ansprüche 1 bis 3, **dadurch gekennzeichnet, daß** die Formgebungsvorrichtung mit Extrusionslöchern eine Metallplatte mit mehreren Extrusionslöchern und einen walzenartigen Ausstoßer aufweist.

6. Verfahren zur thermischen Zersetzung von Kunststoffabfallgranulat, **gekennzeichnet durch** Mischen von Kunststoffabfallgranulat, das **durch** ein Verfahren nach einem der Ansprüche 1 bis 3 hergestellt ist, mit Kohle mit einer mittleren Teilchengröße von höchstens 5 mm und mit Backvermögen bei einem Mischungsverhältnis von höchstens 10 Vol.-% und Trockendestillieren des Ergebnisses bei einer erreichten Maximaltemperatur von mindestens 1000 °C.

7. Verfahren zur thermischen Zersetzung von Kunststoffabfallgranulat nach Anspruch 6, **dadurch gekennzeichnet, daß** die Trockendestillation mit Hilfe eines Koksofens durchgeführt wird.

8. Verfahren zur thermischen Zersetzung von Kunststoffabfallgranulat nach Anspruch 6, **dadurch gekennzeichnet, daß** der Aschegehalt im Kunststoffabfallgranulat höchstens 8 Masse-% beträgt.

9. Verfahren zur thermischen Zersetzung von Kunststoffabfallgranulat, **gekennzeichnet durch** Einblasen von Kunststoffabfallgranulat mit einem mittleren Durchmesser von 5 bis 8 mm, das **durch** ein Verfahren nach einem der Ansprüche 1 bis 3 hergestellt ist, zusammen mit Luft in einen Hochofen zur Roheisenerzeugung.

## Revendications

1. Procédé de moulage de déchets de matières plastiques par éjection de ceux-ci dans un appareil de moulage ayant des trous d'extrusion pour produire des déchets de granulés plastiques par broyage de déchets de matières plastiques contenant au moins 15 % en masse de matières plastiques en forme de film ayant une épaisseur non supérieure à 0,15 mm et de matières plastiques ayant une épaisseur supérieure à 0,15 mm, de sorte qu'au moins 70 % en masse des matières plastiques en forme de film ayant une épaisseur non supérieure à 0,15 mm ont une longueur maximale des pièces broyées d'au moins 0,5 fois le diamètre desdits trous d'extrusion et qu'au moins 70 % en masse des matières plastiques ayant une épaisseur supérieure à 0,15 mm ont une longueur maximale des pièces broyées non supérieure à 1 fois le diamètre desdits trous d'extrusion et par moulage desdits déchets de matières plastiques broyées en éjectant ceux-ci dans lesdits trous d'extrusion ayant un diamètre de 5 à 80 mm.

2. Procédé de production de déchets de granulés plastiques selon la revendication 1, **caractérisé en ce que** lesdits déchets de matières plastiques contiennent au moins 7 % en masse de poly(éthylène) en forme de film ayant une épaisseur non supérieure à 0,15 mm et par le moulage desdits déchets de matières plastiques en éjectant ceux-ci dans lesdits trous d'extrusion dans une plage de température allant de 100 à 140 °C.

3. Procédé de production de déchets de granulés plastiques selon la revendication 1, **caractérisé en ce qu'**une partie ou la totalité desdits déchets de matières plastiques représente des déchets de matières plastiques utilisés récupérés dans la maison.

4. Procédé de production de déchets de granulés plastiques selon l'une quelconque des revendications 1 à 3, **caractérisé en ce que** ledit appareil de moulage ayant des trous d'extrusion est constitué d'un conteneur de maintien de matières plastiques en forme de tonneau ayant une plaque d'extrémité ayant une pluralité de trous d'extrusion et un éjecteur de type à vis disposé à l'intérieur.

5. Procédé de production de déchets de granulés plastiques selon l'une quelconque des revendications 1 à 3, **caractérisé en ce que** ledit appareil de moulage ayant des trous d'extrusion est constitué d'une plaque métallique ayant une pluralité de trous d'extrusion et d'un éjecteur de type rouleau.

6. Procédé de décomposition thermique de déchets de granulés plastiques **caractérisé par** le mélange de déchets de granulés plastiques produits par un procédé selon l'une quelconque des revendications 1 à 3 avec du charbon ayant une taille moyenne de particule non supérieure à 5 mm et ayant une propriété d'agglomération à un rapport de mélange non supérieur à 10 % en volume et par la distillation sèche du résultat à une température maximale atteinte d'au moins 1 000 °C.

7. Procédé de décomposition thermique de déchets de granulés plastiques selon la revendication 6, **caractérisé en ce que** ladite distillation sèche est effectuée à l'aide d'un four à coke.

8. Procédé de décomposition thermique de déchets de granulés plastiques selon la revendication 6, **caractérisé en ce que** la teneur en cendres dans lesdits déchets de granulés plastiques n'est pas supérieure à 8 % en masse.

9. Procédé de décomposition thermique de déchets de granulés plastiques **caractérisé par** le soufflage de déchets de granulés plastiques ayant un diamètre moyen de 5 à 8 mm produits par un procédé selon l'une quelconque des revendications 1 à 3 dans un haut-fourneau de fabrication de fer conjointement à de l'air.
